Europäisches Patentamt

European Patent Office

Office européen des brevets

(11) Veröffentlichungsnummer: **0 325 948**
**A2**

(12) **EUROPÄISCHE PATENTANMELDUNG**

(21) Anmeldenummer: **89100406.1**

(22) Anmeldetag: **11.01.89**

(51) Int. Cl.4: **B29C 45/14**

(30) Priorität: **23.01.88 DE 3801970**

(43) Veröffentlichungstag der Anmeldung:
**02.08.89 Patentblatt 89/31**

(84) Benannte Vertragsstaaten:
**AT BE DE ES FR GB GR IT NL**

(71) Anmelder: **Industriewerke Lemm & Co. KG**
**Karl-Benz-Strasse 2-4 Postfach 33 30**
**D-5500 Trier(DE)**

(72) Erfinder: **Keiner, Reinhold**
**Hellmuth-Lemm-Strasse 5**
**D-5501 Gusterath(DE)**
Erfinder: **Berens, Josef**
**Gartenstrasse 28**
**D-5501 Gusterath(DE)**

(74) Vertreter: **Maxton, Alfred et al**
**Patentanwälte Maxton Maxton Langmaack**
**Goltsteinstrasse 93 VII Postfach 51 08 06**
**D-5000 Köln 51(DE)**

(54) **Verfahren und Vorrichtung zum Anformen einer Sohle aus Kunststoff an einen aufgeleisteten, teilweise offenen Schaft.**

(57) Schuhtypen wie Clogs, Pantoffel, Pantoletten, Sandalen, Sandaletten oder Slings können einen teilweise offenen Schaft aufweisen. Dieser kann beispielsweise bei Sandaletten aus mehreren Bandagen bestehen. Der Erfindung liegt die Aufgabe zugrunde, ein Verfahren und eine Vorrichtung zu schaffen, die es ermöglichen, an einen aufgeleisteten, teilweise offenen Schaft ohne überstehende Brand- oder Zwischensohle eine Sohle aus Kunststoff anzuformen.

Diese Aufgabe wird gemäß der Erfindung dadurch gelöst, daß der mit einer Leistendichtlippe (17) versehene Leisten (16) in eine geöffnete Form eingebracht wird, daß beim Schließen der Form eine der Leistendichtlippe (17) entsprechende Formdichtlippe (13) zur dichtenden Anlage an die Leistendichtlippe (17) gebracht wird, wobei der Schaft (16) durch mindestens ein im Bereich der Leistendichtlippe angeordnetes Federungselement (20) zur dichtenden, zumindest teilweise federnden Anlage an die Formdichtlippe (13) kommt, und daß dann die Sohle (29) angeformt wird.

Verfahren und Vorrichtung können bei der Herstellung der Sohle im Urformverfahren angewandt werden, wie Anspritzen, Angießen, Spritzgießen od. dgl.

FIG. 7

# Verfahren und Vorrichtung zum Anformen einer Sohle aus Kunststoff an einen aufgeleisteten, teilweise offenen Schaft

Die Erfindung bezieht sich auf ein Verfahren zum Anformen einer Sohle aus Kunststoff an einen aufgeleisteten, teilweise offenen Schaft sowie auf eine Vorrichtung zur Durchführung des Verfahrens. Unter Anformen wird in diesem Zusammenhang die Herstellung der Sohle im Urformverfahren, wie Anspritzen, Angießen, Spritzgießen od. dgl., verstanden. Ein teilweise offener Schaft kann bei Schuhtypen wie Clogs, Pantoffeln, Pantoletten, Sandalen, Sandaletten oder Slings, vorliegen. Dabei können die Öffnungen des Schaftes zwangsläufig dadurch gegeben sein, daß der Schaft - wie beispielsweise bei Pantoletten - lediglich aus einer oder mehreren Bandagen besteht.

Aus der DE-PS 32 08 888 ist ein Verfahren zum Anformen einer Kunststoffsohle an einen aufgeleisteten Schuhschaft mit seitlich über dem Schuhschaft überstehender Brand oder Zwischensohle bekannt. Dabei wird zunächst der Schaft mit fertig angebrachter Brand- oder Zwischensohle in einen der Kunststoffsohle entsprechenden Formhohlraum eingebracht und dabei mittels einer trichterförmigen Einführungsöffnung selbsttätig ausgerichtet. Anschließend erfolgt durch Druck auf den Leisten ein vollständiges, abdichtendes Anlegen des seitlich über dem Schuhschaft überstehenden Randes der Brand- oder Zwischensohle an eine sich an die Einführungsöffnung anschließende Dichtlippe. Schließlich wird der Formhohlraum mit dem Material für die Kunststoffsohle ausgefüllt. Bei der Vorrichtung zur Durchführung dieses bekannten Verfahrens unter Verwendung einer Form mit Dichtlippe schließt sich an die Dichtlippe eine im Formhohlraum umlaufende, geglättete Gleitfläche an, die sich nach außen vom eingesetzten Schaft weg trichterförmig erweitert und mit einer Rundung in die Außenfläche der Form übergeht.

Dieses bekannte Verfahren ermöglicht zwar der Bedienungsperson, den aufgeleisteten Schaft einfach in die Einführungsöffnung des Formhohlraums einzulegen, ohne daß dabei hinsichtlich der Lage des aufgeleisteten Schuhs in den Formhohlraum besondere Sorgfalt angewendet werden muß. Jedoch ist es erforderlich, daß die Brand- oder Zwischensohle über den Schuhschaft übersteht, damit die Einführungsöffnung dafür sorgen kann, daß sich die Brand- oder Zwischensohle zunächst grob gegenüber dem Formhohlraum ausrichtet. Auch wenn dann Druck auf den Leisten ausgeübt wird, um unter Wirkung der Einführungsöffnung die Brand- oder Zwischensohle weiterhin zu führen, ist dafür der seitlich über dem Schuhschaft überstehende Rand der Brand- oder Zwischensohle erforderlich. Nach der Ausrichtung der Brand- oder Zwischensohle entfaltet die Dichtlippe ihre volle Dichtwirkung nur dadurch, daß ihr gegenüber der Rand der Brand- oder Zwischensohle stets die richtige erforderliche Lage einnimmt. Erst in dieser Lage kann das Kunststoffmaterial in die Form eingespritzt werden, da nur dann eine sichere Abdichtung zwischen Dichtlippe und dem Rand der Brand-oder Zwischensohle vorliegt.

Die Anwendung des bekannten Verfahrens ist auf Schuhtypen beschränkt, deren Brand- oder Zwischensohle seitlich über dem Schuhschaft überstehen. Derartige Schuhtypen entsprechen keineswegs allein den technischen, wirtschaftlichen und modischen Ansprüchen der Schuhbranche.

Der Erfindung liegt die Aufgabe zugrunde, ein Verfahren zu schaffen, mit dem die vorstehend dargelegten Nachteile vermieden werden und welches die Möglichkeit bietet, an einen aufgeleisteten, teilweise offenen Schaft auch ohne überstehende Brand- oder Zwischensohle eine Sohle aus Kunststoff anzuformen. Gleichzeitig soll eine Vorrichtung zur Durchführung des Verfahrens geschaffen werden, die zudem ein präzises maschinelles Einführen des Leistens in die Form vermeidet und ein einfaches Einführen von Hand ermöglicht.

Diese Aufgabe wird gemäß der Erfindung dadurch gelöst, daß der mit einer Leistendichtlippe versehene Leisten in eine geöffnete Form eingebracht wird, daß beim Schließen der Form eine der Leistendichtlippe entsprechende Formdichtlippe zur dichtenden Anlage an die Leistendichtlippe gebracht wird, wobei der Schaft durch mindestens ein im Bereich der Leistendichtlippe angeordnetes Federungselement zur dichtenden, zumindest teilweise federnden Anlage an die Formdichtlippe kommt, und daß dann die Sohle angeformt wird.

Dieses Verfahren gemäß der Erfindung geht davon aus, daß der der Sohle entsprechende Formhohlraum mit einer umlaufenden Formdichtlippe versehen ist. Entsprechend der Formdichtlippe ist im Leisten eine Leistendichtlippe ausgebildet.

Diese wird im Bereich des offenen Schaftes zur unmittelbaren, dichtenden Anlage an die Formdichtlippe gebracht. Demgegenüber wird der Schaft selbst über ein im Bereich der Leistendichtlippe angeordnetes Federungselement zur zumindest teilweise federnden und damit dichtenden Anlage an die Formdichtlippe gebracht. Die Leistendichtlippe und das in ihrem Bereich angeordnete Federungselement sorgen dann beim Anformen der Sohle für eine sichere Abdichtung zwischen der Formdichtlippe einerseits sowie der Leistendichtlippe und dem Schaft andererseits. Auf diese Weise kann an einen aufgeleisteten, teilweise offenen Schaft auch dann eine Sohle aus Kunststoff angeformt werden, wenn keine seitlich über dem Schaft überstehende Brand- oder Zwischensohle vorhanden ist.

Die Vorrichtung zur Durchführung des Verfahrens gemäß der Erfindung geht von der Verwendung eines Leistens und einer Form mit Formdichtlippe aus. Diese Vorrichtung gemäß der Erfindung ist dadurch gekennzeichnet, daß der Leisten eine Leistendichtlippe aufweist, deren Kontur im Bereich der Öffnungen des Schaftes mit derjenigen der Formdichtlippe im wesentlichen übereinstimmt, im Bereich des Schaftes jedoch Aussparungen von zumindest der Dicke des Schaftes aufweist, wobei im Bereich der Aussparungen Federungselemente im Leisten angeordnet sind.

Die Aussparungen dienen dazu, daß die Kontur der Leistendichtlippe im Bereich des Schaftes durch den Schaft selbst fortgesetzt wird. Dabei sorgen die Federungselemente dafür, daß der Schaft dichtend an der Formdichtlippe anliegt. Auch können etwaige Unregelmäßigkeiten in der Dicke des Schaftes durch die Federungselemente ausgeglichen werden. Hierdurch wird gewährleistet, daß die Formdichtlippe genau der Schuhform angepaßt ist. Der Formhohlraum, der später mit Kunststoff ausgefüllt wird, folgt zusammen mit der Formdichtlippe den Rundungen des Schuhs und insbesondere dessen Sprengung. Beim Anformen tritt kein Kunststoff zwischen Formdichtlippe einerseits und Leistendichtlippe sowie Schaft andererseits hindurch, so daß eine Nacharbeit nicht erforderlich ist und insbesondere kein Ausschuß entsteht. Dies wird nicht zuletzt dadurch erreicht, daß die Federungselemente nicht nur etwaige Unregelmäßigkeiten bei der Dicke des Schaftes ausgleichen sondern durch die Federkraft für eine stets dichtende Anlage an der Formdichtlippe sorgen.

Zweckmäßig ist die Dicke der Leistendichtlippe etwa gleich der Dicke des Schaftes. Wenn dann auch die Dicke der Aussparungen nicht viel größer als diejenige des Schaftes ist, erfordert dies nur einen verhältnismäßig kleinen Federweg des Federungselements.

Vorzugsweise besteht das Federungselement aus einem Einsatz von elastischem Werkstoff, der im Bereich der Aussparung im Leisten befestigt ist. Der Einsatz kann aus Gummi oder Gummiersatzstoff bestehen, vorzugsweise aus Silikonkautschuk. Letzteres ist nicht nur elastisch sondern auch wärmebeständig und bietet darüber hinaus günstige Eigenschaften beim Ausformen des Schuhes.

In weiterer Ausgestaltung der Erfindung kann sich je ein Einsatz über jeweils den gesamten Bereich einer Aussparung erstrecken. Dann wird der Schaft in diesem Bereich durchgehend federnd zur dichtenden Anlage an die Formdichtlippe gebracht. Es genügt jedoch gemäß einer Abwandlung der Erfindung, daß lediglich an den beiden Enden einer jeden Aussparung jeweils ein Einsatz angeordnet ist. Dann sollte die Dicke der Aussparung im wesentlichen der Dicke des Schaftes entsprechen. Für die dichtende Anlage genügt jedoch jeweils ein Einsatz an den beiden Rändern der Aussparung. Diese Einsätze können auch für einen dichtenden Ausgleich sorgen, wenn die Breite des Schaftes etwas geringer als diejenige der Aussparung ausfallen sollte.

Der Einsatz kann beispielsweise band- oder streifenförmig ausgestaltet sein. Es ist aber auch möglich, den Einsatz im wesentlichen zapfenförmig auszubilden und in einer Öffnung des Leistens anzuordnen, wobei der Einsatz im unbelasteten Zustand etwa um den Federweg der Belastung aus dem Leisten hervorsteht. Der Vorteil eines zapfenförmigen Einsatzes besteht darin, daß durch die Länge des Einsatzes ein größerer Federweg gegeben ist. Der Einsatz kann sich in weiterer Ausgestaltung der Erfindung zum Inneren des Leistens hin etwa konisch verjüngen. Dies gibt dem Einsatz einen besseren Halt im Leisten. Der Halt kann dadurch noch vergrößert werden, daß das innere Ende des Einsatzes im Leisten verankert ist, beispielsweise durch einen Dorn, Dübel od. dgl. Dabei können diese Verankerungsmittel auf der gegenüberliegenden Seite des Leistens angeordnet sein. Zweckmäßig kann die äußere Stirnseite des Einsatzes mit einer Übergangskontur von der Leistendichtlippe zur Aussparung versehen sein. Dadurch wird die Abdichtung zwischen Leistendichtlippe und Schaft einerseits sowie Formdichtlippe andererseits im Bereich der beiden Enden einer Aussparung noch sicherer.

Eine bevorzugte Ausgestaltung der Erfindung ist dadurch gekennzeichnet, daß der Leisten im Bereich mindestens einer Öffnung des Schaftes mit einer Halterung versehen ist, während die Form mindestens eine Führung für die Halterung aufweist. So kann der Leisten an der Form selbst befestigt werden.

Diese Befestigungsart ermöglicht ein Verfahren zum Anformen einer Sohle aus Kunststoff an einen aufgeleisteten, teilweise offenen Schaft, bei dem die Bedienungsperson den Leisten mit Schaft einfach in die Führung für die Halterung des Leistens einlegt, ohne daß dabei hinsichtlich der Lage des Leistens in die Form besondere Sorgfalt aufgewendet werden müßte. Die Führung für die Halterung sorgt nämlich dafür, daß beim Schließen der Form die der Leistendichtlippe entsprechende Formdichtlippe zur dichtenden Anlage an die Leistendichtlippe gebracht wird. Der Leisten braucht bei diesem Verfahren beispielsweise nicht von der Station eines Automaten mit besonderer Präzision in die Form geführt zu werden. Es ist auch nicht mehr notwendig, die Führung des Leistens innerhalb der Station zu justieren. Bei der Justierarbeit für bekannte Verfahren, bei denen Leisten aus Metall probeweise in die Form gebracht werden, können Ungenauigkeiten der Justierung dazu führen, daß der Leisten auf die Formdichtlippe aufsetzt und diese zerstört. Eine derartige Gefahr wird durch die Vorrichtung gemäß der Erfindung wesentlich vermindert. Gleichzeitig wird auch das Risiko eines Produktionsausfalles verringert. Wenn nämlich Ungenauigkeiten der Führung des Leistens innerhalb der Station gegenüber der Form auftreten, beispielsweise durch Veränderungen oder eine Lösung der Justierung, wird der Leisten mit dem Schaft in unrichtiger Lage gegen die Formdichtlippe gebracht, welche in diesem Falle als Schneide wirkt und den Schaft zumindest beschädigen kann. Derartige Ausschüsse werden durch die Vorrichtung gemäß der Erfindung erheblich vermindert.

Als besonderer Vorteil ergibt sich bei dem Verfahren gemäß der Erfindung, daß Leisten aus Kunststoff verwendet werden können, die wesentlich preisgünstiger als Leisten aus Metall sind. Diese Leisten können mit fertig gezwicktem Schaft in die Form eingesetzt werden. Arbeitsvorgänge, die vor und nach dem Anformen erforderlich sind, können außerhalb des Automaten erfolgen. So ist es möglich, den Schaft nicht mehr auf dem Automaten auf den Leisten aufzuziehen. Auch das Abdrücken kann außerhalb des Automaten in Schablonen erfolgen. Weiterhin ist es möglich, den Schaft aufzurauhen, bevor der aufgeleistete Schaft dem Automaten zugeführt wird.

Die Verlagerung aller dieser und evtl. weiterer Arbeitsgänge von dem Automaten auf kostengünstige Arbeitsstellen hat eine erhebliche zeitliche Entlastung des Automaten zur Folge. Dadurch wird selbstverständlich die Produktivität eines Automaten wesentlich erhöht, zumal die Handhabungszeiten für das Einführen der Leisten in die Halterungen deutlich geringer sind als die Zuführung der Leisten durch die Station eines Automaten. Dies gilt nicht zuletzt dann, wenn die Leisten gemäß der Erfindung von Hand eingeführt werden. Eine maschinelle Einführung ist also keineswegs erforderlich, obwohl selbstverständlich beispielsweise die Einführung durch einen Manipulator denkbar ist. In jedem Falle können aber die Taktzeiten des Automaten verkürzt werden.

Die Erfindung kann dadurch ausgestaltet werden, daß der Leisten sowohl an der Spitze als auch an der Ferse mit einer Halterung versehen ist, während die Form längsgeteilt ist und beide Formhälten an Spitze und Ferse etwa je zur Hälfte eine Führung aufweisen. Diese Vorrichtung bietet den Vorteil, daß der Leisten bei offener Form zunächst in eine Formhälfte eingesetzt werden kann, damit anschließend die Form geschlossen wird und dann beide Hälften der Führungen den Leisten fixieren.

Im einzelnen können die Halterungen als Laschen ausgebildet sein, die jeweils zumindest einen horizontalen Schenkel aufweisen, während die Führungen aus je zwei Winkelstücken bestehen, die auf der Oberseite der linken bzw. rechten Formhälfte befestigt sind und die Schenkel bei geschlossener Form umschließen, wobei die äußeren Enden der Schenkel an in der Oberseite der Formhälften ausgebildeten Anschlägen anliegen. Dabei können die Laschen mit dem Leisten verschraubt sein.

In weiterer Verbesserung dieser Ausgestaltung kann zwischen den Winkelstücken und der Oberseite der linken bzw. rechten Formhälfte je ein Abstandsplättchen angeordnet sein. Zweck mäßig können diese durch Schrauben befestigt werden, mit denen auch die Winkelstücke auf den Formhälften gehalten werden. Durch unterschiedliche Dicke der Abstandsplättchen kann vorteilhaft die Eintauchtiefe des Leistens in die Form verändert werden.

Wenn ein derartiger Leisten bei offener Form in die eine Formhälfte eingeführt wird, genügen die beiden Führungen für die Laschen an sich für einen sicheren, vorläufigen Halt des Leistens, bis die Form geschlossen wird und die Führungen der anderen Formhälfte zum Eingriff kommen. Die Sicherheit des Haltes kann aber gemäß der Erfindung noch dadurch erhöht werden, daß die Halterungen aus magnetisierbarem Werkstoff, vorzugsweise Flachstahl, bestehen, und in zumindest einer Seite der Führungen Magnete angeordnet sind. Diese Magnete bieten eine zusätzliche Fixierung zum Formschluß der Führungen.

Weitere Merkmale und Vorteile der Erfindung ergeben sich aus der folgenden Beschreibung eines die Erfindung nicht beschränkenden Ausführungsbeispiels, wobei auf die Zeichnung Bezug genommen wird. Es zeigen

Fig. 1 eine Formhälfte bei offener Stellung in Seitenansicht,

Fig. 2 eine Form bei geschlossener Stellung in Draufsicht,

Fig. 3 einen Leisten gemäß der Erfindung in Seitenansicht,

Fig. 4 einen Teil-Querschnitt durch die Form gemäß der Linie IV-IV aus Fig. 2,

Fig. 5 eine Teil-Ansicht des Leistens in vergrößertem Maßstab,

Fig. 6 eine Teil-Draufsicht auf den Leisten gem. Fig. 5, teilweise im Querschnitt,

Fig. 7 die Formhälfte gem. Fig. 1 mit eingesetztem Leisten und angeformter Sohle und

Fig. 8 einen Querschnitt durch die Form mit Schaft gemäß der Linie VIII-VIII aus Fig. 7.

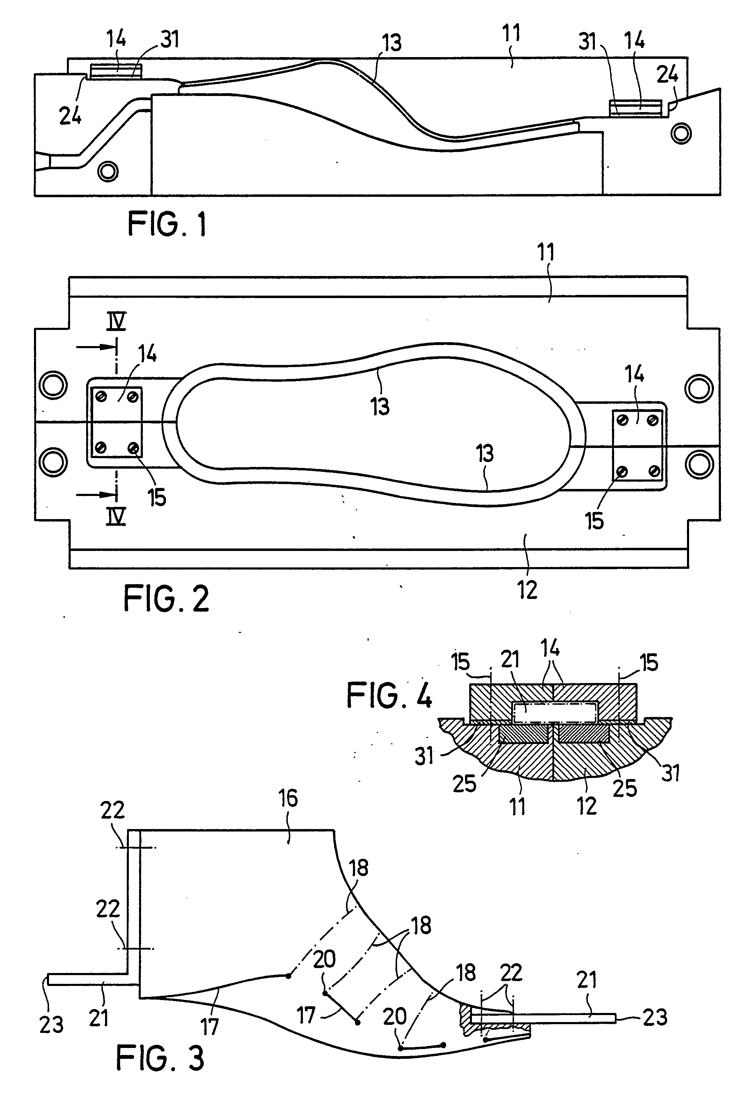

Fig. 1 zeigt eine zur Durchführung des Verfahrens gemäß der Erfindung geeignete Form, und zwar die linke Formhälfte 11 dieser Form. Die Form ist längsgeteilt, damit durch seitliches Wegführen der linken Formhälfte 11 und rechten Formhälfte 12 (Fig. 2) die Form geöffnet und ein fertiger Schuh herausgenommen werden können. Die linke Formhälfte 11 und die rechte Formhälfte 12 (Fig. 2) sind mit einer umlaufenden Formdichtlippe 13 versehen, die sich verhältnismäßig scharfkantig nach innen erstreckt. Weiterhin ist in Fig. 1 die Lage von zwei Winkelstücken 14 und zwei Abstandsplättchen 31 dargestellt, die Bestandteile von Führungen für Halterungen eines Lestens bilden, welche noch später näher beschrieben werden.

Außer der Lage der Winkelstücke 14 zeigt Fig. 2 deren Befestigung auf beiden Formhälften 11 und 12 durch Schrauben 15.

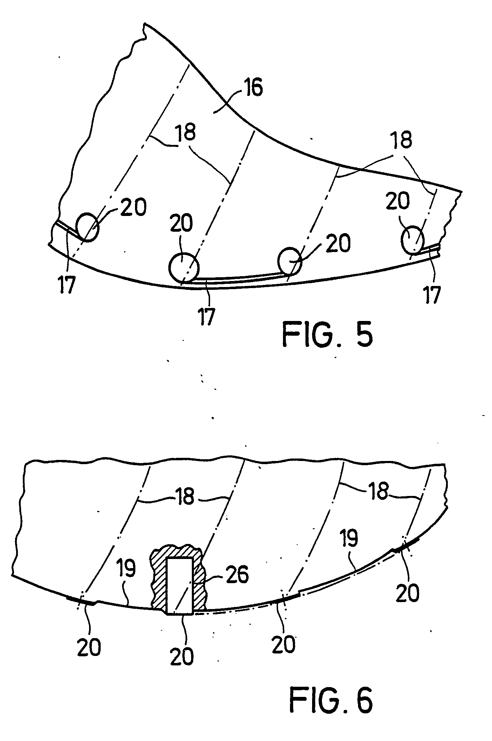

Fig. 3 zeigt einen Leisten 16, der aus Kunststoff besteht. Dieser Leisten 16 ist mit einer Leistendichtlippe 17 versehen. Die Lage eines nicht dargestellten Schaftes 18 ist durch gestrichelte Linien angedeutet. Dadurch wird veranschaulicht, daß die Leistendichtlippe 17 im Bereich des Schaftes 18 Aussparungen 19 (Fig. 6) aufweist, die zumindest die Dicke des Schaftes 18 besitzen. Im Bereich der Öffnungen des Schaftes 18 stimmt die Kontur der Leistendichtlippe 17 mit derjenigen der Formdichtlippe 13 im wesentlichen überein. Aus Fig. 3 ist auch die Lage von Einsätzen 20 als Federungsmittel ersichtlich, die im Leisten 18 angeordnet sind.

Da der Schaft 18 im wesentlichen aus zwei - gestrichelt dargestellten - Bandagen besteht, ist er sowohl an der Spitze als auch der Ferse offen. So kann der Leisten 16 an der Spitze und an der Ferse mit je einer Halterung 21 versehen sein. Diese Halterungen 21 sind als Laschen ausgebildet und an dem Leisten 16 durch Schrauben 22 befestigt.

Fig. 4 stellt dar, wie die Halterungen 21 geführt werden. Die beiden Führungen bestehen nämlich jeweils aus zwei Winkelstücken 14, die auf der Oberseite der linken bzw. rechten Formenhälfte 11 bzw. 12 durch die Schrauben 15 befestigt sind. So umschließen jeweils zwei Winkelstücke 14 bei geschlossener Form eine Halterung 21. Dabei liegen die äußeren Enden 23 der Halterungen 21 an jeweils einem Anschlag 24 an, die in den Oberseiten der Formhälfte 11 und 12 ausgebildet sind. Die Halterungen 21 bestehen aus Flachstahl. In beiden Führungen sind Magnete 25 angeordnet, und zwar in jeder Formhälfte 11 bzw. 12 ein Magnet in jeder der beiden Führungen. Diese Magnete sorgen zusätzlich dafür, daß der Leisten 16 in der vorbestimmten Lage sicher verbleibt.

Zwischen den Winkelstücken 14 und der Oberseite der linken bzw. rechten Formhälfte 11 bzw. 12 ist je ein Abstandsplättchen 31 angeordnet. Diese sind durch die Schrauben 15 befestigt, mit denen auch die Winkelstücke 14 auf der Formhälfte gehalten werden. Dadurch ist die Eintauchtiefe des Leistens 16 in die Form verändert, und zwar verringert worden.

Aus Fig. 5 geht hervor, daß die Leistendichtlippe 17 von Aussparungen 19 (Fig. 6) unterbrochen ist. Jeweils an den Enden einer Aussparung befindet sich ein Einsatz 26, der als Federungsmittel aus Siliconkautschuk besteht. Der Einsatz 26 ist zapfenförmig ausgebildet und in einer Öffnung 27 des Leistens 16 angeordnet.

Fig. 6 zeigt, daß die Aussparungen 19 etwa die Dicke des - gestrichelt dargestellten - Schaftes 18 aufweisen.

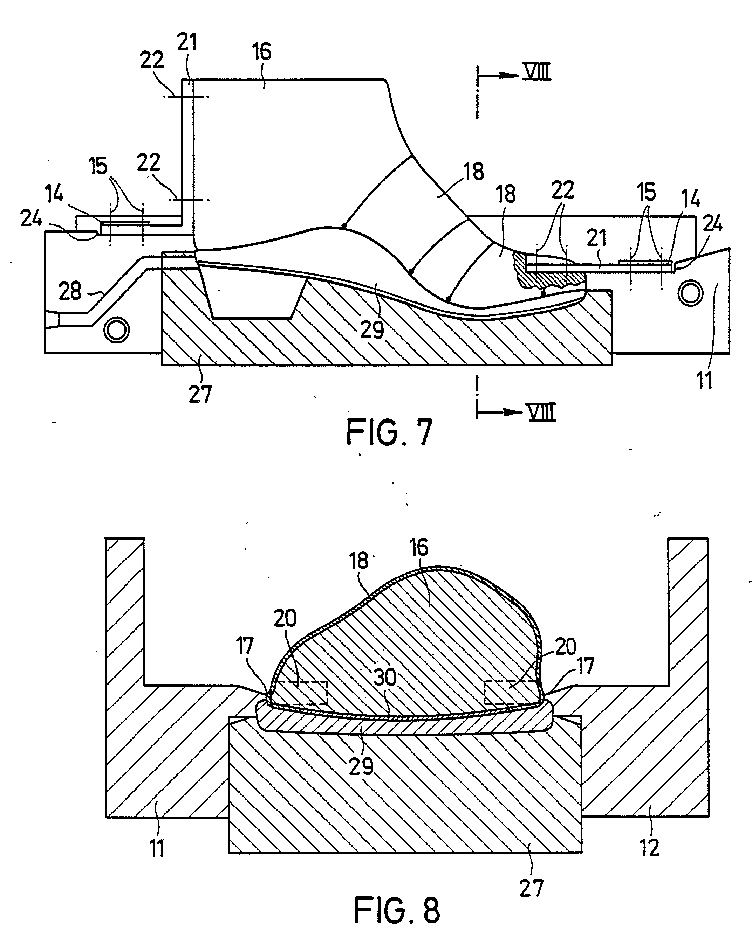

Fig. 7 zeigt zum Ablauf des Verfahrens die linke Formhälfte 11 mit eingesetztem Schaft 16. Außerdem ist ein Bodenstempel 27 in die linke Formhälfte 11 und die - nicht dargestellte - rechte Formhälfte 12 eingebracht worden. Durch einen Kanal 28 ist der Kunststoff für eine Sohle 29 eingespritzt worden.

In Fig. 8 sind die linke Formhälfte 11 und die rechte Formhälfte 12 mit dem Bodenstempel 27 zu sehen. Die Leistendichtlippen 17 der linken Formhälfte 11 und der rechten Formhälfte 12 liegen dichtend am Schaft 18 an. Die ebenfalls zur Dichtung dienenden Einsätze 20 sind gestrichelt dargestellt. Der Schaft 18 ist mit einer Einnähsohle 30 aus textilem Material verbunden. Schaft 18 und Einnähsohle 30 umgeben den Leisten 16. Unterhalb der Einnähsohle 30 ist die Sohle 29 angeformt.

## Ansprüche

1. Verfahren zum Anformen einer Sohle aus Kunststoff an einen aufgeleisteten, teilweise offenen Schaft, dadurch **gekennzeichnet,** daß

a) der mit einer Leistendichtlippe versehene Leisten in eine geöffnete Form eingebracht wird,

b) daß beim Schließen der Form eine der Leistendichtlippe entsprechende Formdichtlippe zur dichtenden Anlage an die Leistendichtlippe gebracht wird,

c) wobei der Schaft durch mindestens ein im Bereich der Leistendichtlippe angeordnetes Federungselement zur dichtenden, zumindest teilweise federnden Anlage an die Formdichtlippe kommt,

d) und daß dann die Sohle angeformt wird.

2. Vorrichtung zur Durchführung des Verfahrens nach Anspruch 1 unter Verwendung eines Leistens und einer Form mit Formdichtlippe, dadurch gekennzeichnet, daß der Leisten (16) eine Leistendichtlippe (17) aufweist, deren Kontur im Bereich der Öffnungen des Schaftes (18) mit derjenigen der Formdichtlippe (13) im wesentlichen übereinstimmt, im Bereich des Schaftes (18) jedoch Aussparungen von zumindest der Dicke des Schaftes (18) aufweist, wobei im Bereich der Aussparungen Federungselemente (Einsätze 20) im Leisten (16) angeordnet sind.

3. Vorrichtung nach Anspruch 2, dadurch gekennzeichnet, daß die Dicke der Leistendichtlippe (17) etwa gleich der Dicke des Schaftes (18) ist.

4. Vorrichtung nach Anspruch 2 oder 3, dadurch gekennzeichnet, daß das Federungselement aus einem Einsatz (20) von elastischem Werkstoff besteht.

5. Vorrichtung nach Anspruch 4, dadurch gekennzeichnet, daß der Einsatz (20) aus Gummi oder Gummiersatzstoff, vorzugsweise Siliconkautschuk, besteht.

6. Vorrichtung nach Anspruch 4 oder 5, dadurch gekennzeichnet, daß sich je ein Einsatz (20) über jeweils den gesamten Bereich einer Aussparung (19) erstreckt.

7. Vorrichtung nach Anspruch 4 oder 5, dadurch gekennzeichnet, daß an den Enden einer Aussparung (19) jeweils ein Einsatz (20) angeordnet ist.

8. Vorrichtung nach Anspruch 7, dadurch gekennzeichnet, daß der Einsatz (20) im wesentlichen zapfenförmig ausgebildet in einer Öffnung des Leistens (16) angeordnet ist und im unbelasteten Zustand etwa um den Federweg der Belastung aus dem Leisten (16) hervorsteht.

9. Vorrichtung nach Anspruch 8, dadurch gekennzeichnet, daß sich der Einsatz (20) zum Inneren des Leistens (16) hin etwa konisch verjüngt.

10. Vorrichtung nach Anspruch 8 oder 9, dadurch gekennzeichnet, daß das innere Ende des Einsatzes (20) im Leisten (16) verankert ist, beispielsweise durch einen Dorn, Dübel od. dgl.

11. Vorrichtung nach einem der Ansprüche 8 bis 10, dadurch gekennzeichnet, daß die äußere Stirnseite des Einsatzes (20) mit einer Übergangskontur von der Leistendichtlippe (17) zur Aussparung (19) versehen ist.

12. Vorrichtung nach einem der vorstehenden Ansprüche, dadurch gekennzeichnet, daß der Leisten (16) im Bereich mindestens einer Öffnung des Schaftes (18) mit einer Halterung (21) versehen ist, während die Form mindestens eine Führung für die Halterung (21) aufweist.

13. Vorrichtung nach Anspruch 12, dadurch gekennzeichnet, daß der Leisten (16) sowohl an der Spitze als auch an der Ferse mit einer Halterung (21) versehen ist, während die Form längsgeteilt ist und beide Formhälften an Spitze und Ferse etwa je zur Hälfte eine Führung aufweisen.

14. Vorrichtung nach Anspruch 13, dadurch gekennzeichnet, daß die Halterungen (21) als Laschen ausgebildet sind, die jeweils zumindest einen horizontalen Schenkel aufweisen, während die Führungen aus je zwei Winkelstücken (14) bestehen, die auf der Oberseite der linken bzw. rechten Formhälfte (11 bzw. 12) befestigt sind und die Schenkel bei geschlossener Form umschließen, wobei die äußeren Enden (23) der Schenkel an in der Oberseite der Formhälften (11, 12) ausgebildeten Anschlägen (24) anliegen.

15. Vorrichtung nach Anspruch 14, dadurch gekennzeichnet, daß zwischen den Winkelstücken (14) und der Oberseite der linken bzw. rechten Formhälfte (11 bzw. 12) je ein Abstandsplättchen (31) angeordnet ist.

16. Vorrichtung nach einem der Ansprüche 12 bis 15, dadurch gekennzeichnet, daß die Halterungen (21) aus magnetisierbarem Werkstoff, vorzugsweise Flachstahl, bestehen und in zumindest einer Seite der Führungen Magnete (25) angeordnet sind.

FIG. 1

FIG. 2

FIG. 4

FIG. 3

46 p 8713

FIG. 5

FIG. 6

**FIG. 7**

**FIG. 8**